# EUROPEAN PATENT SPECIFICATION

(11) **EP 2 625 704 B1**
(45) Date of publication and mention of the grant of the patent: **13.08.2014**
(21) Application number: 11782685.9
(22) Date of filing: 04.10.2011
(51) Int. Cl.: H01G 9/20

(54) **VERTICAL ELECTRICAL CONNECTION OF PHOTOELECTROCHEMICAL CELLS**
VERTIKALE ELEKTRISCHE VERBINDUNG FÜR PHOTELEKTROCHEMISCHE ZELLEN
CONNEXION ÉLECTRIQUE VERTICALE DE CELLULES PHOTOÉLECTROCHIMIQUES

(30) Priority: 04.10.2010 IT RM20100519
(43) Date of publication of application: 14.08.2013
(73) Proprietor: Dyepower, 00185 Roma (IT)
(72) Inventor: GIORDANO, Fabrizio, I-00185 Roma (IT); PRETROLATI, Eleonora, I-00185 Roma (IT); GUIDOBALDI, Andrea, I-00185 Roma (IT); BROWN, Thomas, I-00185 Roma (IT); TOZZI, Richard, I-00185 Roma (IT)
(74) Representative: Santi, Filippo
(86) International application number: PCT/IT2011/000342
(87) International publication number: WO 2012/046262

(56) References cited:
- EP-A2- 1 603 169
- AU-B2- 761 370
- US-A1- 2005 067 006

## Description

The present invention concerns vertical electrical connection of photoelectrochemical cells or DSSC (dye-sensitized solar cells).

More in detail, the invention concerns the structure of said vertical electrical connection, integral with the photovoltaic modules of DSSC cells, and a process for the realization thereof.

DSSC cells are photovoltaic cells constituted by a multilayered structure delimited by two substrates. Tipically, said substrates are made of transparent materials (preferably glass, but also PET or PEN) and are coated, on the side facing towards the interior of the multilayered structure, by an electrically conductive coating, which is also transparent (generally a transparent conductive oxide, preferably a titanium oxide doped with fluorine or iodine, respectively FTO and ITO).

Amongst the two substrates a photoelectrode (the anode) is arranged, which is arranged on the conductive coating of one of the two substrates; a counterelectrode (the catode), arranged on the conductive coating of the other substrate; and an electrolyte interposed between said photoelectrode and said counterelectrode. In particular, the photoelectrode is usually made of a porous titanium oxide, which supports the active material, consisting of a dye capable of transferring electrons following the absorption of a photon. The counterelectrode is usually made of platinum, while the electrolytic solution is usually made of iodine ****(I₂) and potassium iodide (KI).

Photoelectrochemical cells of this type have been described for example in U.S. Patent No. 4,927,721; the materials used in this type of cells have been described for example in U.S. Patent No. 5,350,644.

By their nature, the conductive coatings of the structures have high resistance. In addition, individual cells of this type are not able to generate the voltage levels required in most of the possible applications to which a photoelectrochemical cell can be addressed.

To overcome these drawbacks it is therefore necessary to connect a plurality of photoelectrochemical cells in series with each other, with the result of generating greater voltage differences minimizing the total current, ie minimizing the power losses due to the resistance of the conductive coatings.

In practice, on the same substrate a photoelectrochemical module is realised, that is the conductive coatings of each substrate are divided into a plurality of electrically isolated regions, usually conformed as a plurality of strips arranged side by side, each region of the conductive coating of one of the two substrates being placed in a position coincident and only slightly offset in a direction transverse to that of a region of the conductive coatings of the other substrate, between each pair of overlapping regions of the two substrates a photoelectrochemical cell being realised. The side by side photoelectrochemical cells, thus obtained, are connected in series by means of a connection integrated with the same substrate, made during the realisation of the module.

Connections in series integrated with the substrate can be made according to different schemes, known as Z-connection, W-connection and external connection.

Z-like connections are made of a series of vertical contacts, arranged in the space between two cells side by side, in particular in the space between the long side of two cells or strips, that is in the space that is not used for the cells due to the staggered arrangement of the electrically isolated regions of the conductive coatings of the two substrates, and electrically connecting to each other the isolated regions of the conductive coating of the two substrates, according to a configuration that will be explained in more detail later in the description.

W-like connections are obtained without the need for contacts, but the configuration of the resulting photoelectrochemical module tends to have internal current imbalances, since half of the cells according to this configuration is lighted from the side of the counterelectrode. In addition, on the same substrate photoelectrode and counterelectrode alternates: thus titanium dioxide and platinum are deposited and undergo curing at the same time. This implies the inability to individually optimize the curing process of the two materials, which typically have different optimal firing temperatures and times (420 °C and 15 minutes for platinum, 500 °C and 30 minutes for titanium dioxide).

As far as the external connection is concerned, on the contrary, this kind of connection is made on the border of the module, in proximity of the short sides of the strips forming the photoelectrochemical cells. The long path the electrons must go through in order to arrive at the borders of the module, where the connection of individual cells is made, limits the length of the cells (to prevent the addition of supplemental losses due to resistances) and importantly jeopardize the module fill factor, specific parameter describing the ratio between the maximum power produced by the device and the product of the open circuit voltage multiplied by the closed circuit current, and decreasing proportionally at increasing of the value of the resistence introduced by the connections between the cells and by the resistance introduced by the long path of the electrons.

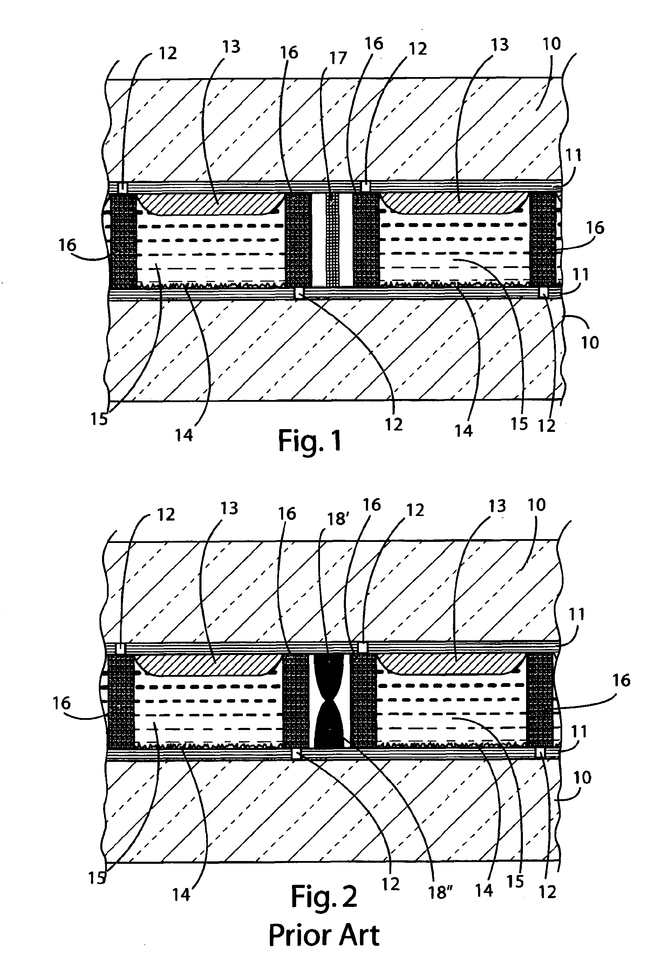

With reference to figure 1, the Z-type connection configuration is schematically shown between two cells of a photoelectrochemical module.

In particular, figure 1 shows the two substrates, referred to with the numeral 10, each being coated, on the side facing towards the other substrate, by a transparent electrically conductive coating 11. The conductive coating 11 is divided into electrically isolated regions by the interruptions 12. Each photoelectrochemical cell is made in the area comprised between two face to face electrically isolated regions of conductive coatings 11 of the two opposing substrates 10, each cell being made of a photoelectrode 13, arranged on the conductive coating 11 of one of the two substrates 10; a counterelectrode 14, arranged on the conductive coating 11 of the other substrate 10; and a liquid electrolyte interposed between said photoelectrode 13 and said counterelectrode 14.

Each cell is laterally bordered by a encapsulant 16, with the aim of keeping the liquid electrolyte in the cell.

The connection of cells in series is obtained by means of the connection element 17, connecting the staggered portion of the electrically isolated region of the conductive coating 11 of one of the two substrates 10 with the coincident staggerd portion of the electrically isolated region of the conductive coating 11 of the opposing substrate 10. Due to the fact that every electrically isolated regions of the conductive coating 11 are in electric contact with the respective electrode, the connection element 17, through the conductive coating 11 on each of the two opposing substrates 10, allows to connect the electrodes of two side by side photoelectrochemical cells.

The path of the connection by means of the vertical contact can be represented by three resistances: a first resistance constituted by the contact resistance between the conductive coating 11 arranged on the first substrate 10 and the connection element 17, a second resistance constituted by the resistance of the material of the connection element 17 itself and a third resistance constituted by the contact resistance between the connection element 17 and the conductive coating 11 arranged on the substrate 10 opposing the first substrate.

According to the prior art, the connection element can be made by means of different technologies:
- deposition of a conductive paste on the conductive coating of both substrates and curing of the same paste before coupling the substrates to form the photoelectrochemical module (encapsulation);
- deposition of a conductive paste on the conductive coating of a single substrate and curing of the same before coupling the substrates to form the photoelectrochemical module (encapsulation); or
- deposition of a conductive paste (on the conductive coating of one or of both substrates) and curing of the same during the step of sealing (by encapsulation) of the photoelectrochemical module.

In any case, the deposition occurs by making a "strip" of a paste comprising the material that will make the connection element 17 on the conductive coating 11 of one or of both substrates 10, together with one or more binders and/or solvents, in a position side by side with the lines of interruption 12 of the conductive coating 11, that is on the staggerd portion of the electrically isolated region of the conductive coating 11, so that, by coupling the substrates 10 to form the photoelectrochemical module, the lines of interruption are slightly staggered, allowing the conductive elements constituting the vertical contact to connect the conductive coatings 11 of the electrically isolated regions of the opposing substrates 10 to each other.

In case of deposition of conductive paste on the conductive coating 11 of both substrates 10 and subsequent curing before encapsulation, the curing temperature can be chosen depending on the material used, so to assure an electric contact with low resistance, in particular with reference to the interface between the layer obtained by curing the conductive paste and conductive coating. In practice, these temperatures are generally in the range of 500-520°C, and always lower than 550°C (temperature over which the conductive coating and/or the substrate risk to be damaged), allowing to remove as much as possible all the carriers of the conductive material within the paste and thus obtaining a high conductivity, as much as possible close to that of the chosen conductive material.

In this case, as schematized in figure 2, conduction occurs by simple mechanical contact between the two portions 18' and 18" of the connection element deposited on the coating 11 of the opposing substrates 10, with the consequence that the resistance between the two portions 18' and 18" forming the connection element is not negligible, but are on the contrary negligible the resistances between the conductive coating 11 disposed on each substrate 10 and the respective portion 18', 18" of the connection element. In addition, connections made in this way have electrical conduction problems with increasing temperature. This is due to the different thermal behavior (thermal expansion) between the material of which the connection element is made and the material of the encapsulant 16 keeping the liquid electrolyte 15 within the respective cells.

In the case, not represented in the figures enclosed with the description, of deposition of the conductive paste on the conductive coating 11 of a single substrate 10 and curing of the same before encapsulation to make the connection element, conduction occurs by simple mechanical contact between the connection element and the conductive coating 11 and the resistance between the conductive coating 11 of the substrate 10 on which the paste was not deposited and the connection element is not negligible.

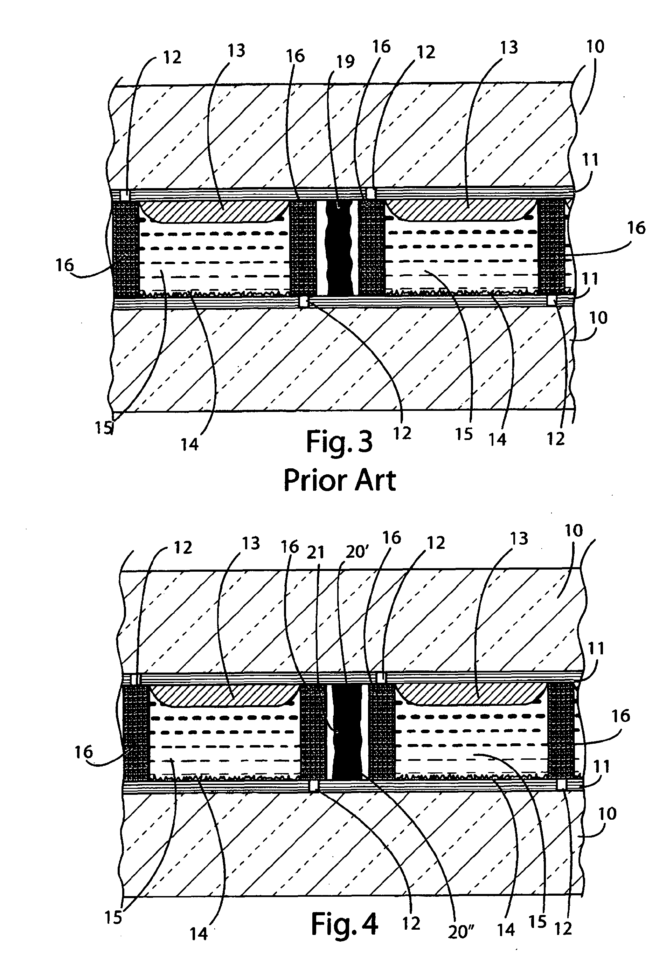

Figure 3 shows the case of deposition of a conductive paste on the conductive coating 11 of one or of both substrates 10 and subsequent curing of the conductive paste during the step of sealing (by encapsulation) of the module, so that the contact is obtained by means of a connection element 19 constituted by a single body connecting the coating 11 of the two opposing substrates 10. In this case, however, curing of the conductive paste can occur only at a temperature lower than those that could damage the elements forming the module, and in particular the dye of the photoelectrode 13 and the material forming the encapsulant 16, with the consequence that it can not have optimal characteristics as far as the electrical conduction is concerned. In this case, resistances generated at both sides of the conductive coating 11 and the connection element 19 are not negligible.

Moreover, connections of this kind have non optimal conductivity, beside the problem of decay of their performances with increasing temperature.

Very similar problems can be met in other solutions according to the prior art, which take the form of compromise solutions between those described above.

For example, US2005/067006 discloses photoelectrochemical cells connected in series in which the conductive coatings (and the electrodes) of two cells side by side are connected by a vertical connection element made of a metal wire, arranged parallel to the cells, coated by a low-melting metal and encapsulated in a layer of adhesive.

AU761370 discloses a configuration similar to that disclosed in US2005/067006, wherein the vertical connection element comprises a titanium wire and tungsten particles incorporated in a matrix of SiO₂.

EP1603169 discloses a configuration similar to that disclosed in US2005/067006, wherein the vertical connection element comprises a metal or an alloy coated with a low temperature solder or a silver-based epoxy resin.

US2010/0024875 discloses photoelectrochemical cells connected in series in which the conductive coatings (and the electrodes) of two cells side by side are connected by a vertical connection element made of a plurality of layers, wherein a first layer is applied on the conductive coating of one of the two substrates and cured before application of a dye, and a second layer is applied on the conductive coating of the other substrate and cured after closing the module, and after application of the dye. According to the teaching of this patent application, then, the first layer can be made choosing the best curing temperature, taking into consideration the material used, in order to obtain an electric contact having low resistance, whereas the second layer, which is made at the momento of closing the module, if on the one hand allows to increase the contact surface between said first layer and the conductive coating of the opposing layer, conforming to the shape of the previously formed first layer and filling the space still available, on the other hand, since it must be made without damaging the encapsulant and/or the dye, can not have optimal characteristics as far as electrical conduction is concerned.

In all of these prior art documents, then, efficiency of the connection, which is made to put the different photoelectrochemical cells in series, is adversely affected by the presence of the layer undergoing curing during or after mating of the two substrates. The influence of this layer is much more important because it is directly interfaced with the conductive coating 11 of the substrate 10. In fact, due to the different nature of the contact element and of the material forming the conductive material, the electrical conduction through the interface between the contact element and the conductive coating 11 is not negligible.

In the light of the above, it appearsevident the need for having a vertical electrical connection of photoelectrochemical cells that allows for increasing the performances of the vertical contact and increasing the reliability of the connection with respect to mechanical and thermal stresses.

In this context it is proposed the solution according to the present invention, with the aim of providing for a connection element allowing to realize a single path of the connection between the conductive coating on one of the two substrates, the connection element and the conductive coating on the opposing substrate, which is highly conductive also at a temperature of about 100°C.

These and other results are achieved according to the present invention providing for a vertical electrical connection of photoelectrochemical cells, of a composite kind, that is made by two portions, respectively coupled with the conductive coating of one of the two opposing substrates, made of conductive material with high compactness and conductivity, sealed with the conductive coating, and of a third portion of connection of the first two, made of a paste of a conductive material having a low point of calcination.

The purpose of the present invention is therefore that of realizing a vertical electrical connection of photoelectrochemical cells allowing to overcome the limits of the solutions according to the prior art and to obtain the previously described technical results.

A further aim of the invention is that said connection element can be made with substantially low costs.

Not last aim of the invention is that of realizing a connection element which is substantially simple, safe and reliable.

It is therefore a first specific object of the present invention a vertical electrical connection of photoelectrochemical cells, arranged side-by-side between two opposing substrates, at least one of which is transparent or semi-transparent, and covered, on the side facing towards the other substrate, by an electrically conductive coating divided into a plurality of side-by-side regions electrically isolated by means of a corresponding number of interruptions, said vertical electrical connection being arranged between an electrically isolated region of the electrically conductive coating of a substrate, in electric contact with a photoelectrochemical cell, and the electrically isolated region of the electrically conductive coating of the opposing substrate, in contact with an adjacent photoelectrochemical cell, constituted by three overlapping portions, that is two first portions, respectively coupled with the conductive coating of each of the two opposing substrates delimiting said photoelectrochemical cells, made of a conductive material in the form of granules aggregated between each other and integrated to said conductive coating, and an additional intermediate portion, connecting the two portions coupled to the conductive coating of each of the two substrates, made of a conductive material constituted by a matrix of polymers and/or epoxy resins and/or organic binders, in which particles of conductive material or conductive polymers are dispersed.

Preferably, according to the present invention, said two portions coupled with the conductive coating of each of the two substrates have porosity (expressed as volume of void spaces over total volume)) lower than 0,5, comprise granules aggregated to each other with chemical type bonds and are aggregated to said conductive coating with mechanical, chemical type bonds or a combination of these two types of bonds.

Preferably, according to the present invention, said two portions coupled with the conductive coating of each of the two substrates comprise an amount of residues of organic solvents and binders lower than 10% by weight and still more preferably lower than 0,1% by weight.

Moreover, according to the present invention, said intermediate portion comprises an amount of residues of organic solvents and binders higher than 5% by weight.

Always according to the invention, both said conductive material sintered at high temperature, and said conductive material sintered at low temperature can be a silver-based material.

Still according to the invention, said residues of organic solvents and binders are constituted by residues of organic carriers based on ethylcellulose or hydroxyethylcellulose or polyethylene glycol (PEG) or Carbovax^{™} or Terpineol or ethanol or combinations thereof.

Moreover it is a second specific object of the present invention a method of manufacturing vertical electrical connection of photoelectrochemical cells, comprising the following steps:
- deposition, on each substrate, previously cleaned and fired but not yet mated with the corresponding opposing substrate to form a photoelectrochemical module, of strips, according to complementary paths, made of a paste of conductive material which can be sintered at high temperature;
- firing the substrates, thus obtaining the sintering at high temperature of the conductive material of the previously deposited strips;
- deposition, in correspondence of the strips of material previously deposited and sintered, made of a paste of conductive material which can be sintered at low temperature;
- mating the opposing substrates and at the same time mating of the strips of material previously deposited and sintered, by means of the interposition of said paste of conductive material which can be sintered at low temperature.

According to the invention, said step of firing the substrates and sintering the conductive material which can be sintered at high temperature preferably occurs at a temperature not lower than 300°C and not higher than 550°C and more preferably at a temperature of 520°C.

Still according to the invention, said step of mating the opposing substrates preferably occurs at a temperature comprised between 70°C and 170°C and more preferably at a temperature equal to about 100°C.

The present invention will be disclosed for illustrative non limitative purposes, according to a preferred embodiment, with reference in particular to the figures of the enclosed drawings, wherein:
- figure 1 shows schematically the Z-type connection configuration between two cells of a photoelectrochemical module,
- figure 2 shows a first Z-type connection configuration between two cells of a photoelectrochemical module according to the prior art,
- figure 3 shows a second Z-type connection configuration between two cells of a photoelectrochemical module according to the prior art,
- figure 4 shows a Z-type connection configuration between two cells of a photoelectrochemical module according to a preferred embodiment of the present invention,
- figure 5 shows a diagram of the electrical characteristic of the module obtained according to the example of manufacturing reported below in the description,
- figure 6 shows a diagram of the efficiency as a function of temperature of four modules obtained according to the example of manufacturing reported below in the description, and
- figure 7 shows a diagram of the fill factor as a function of temperature of four modules obtained according to the example of manufacturing reported below in the description.

With reference to figure 4, the connection element according to the present invention can be manufactured by screen-printing or by blade coating deposition or by dispensing of strips made of a paste of conductive material which can be sintered at high temperature (limited to the needs of conservation of the conductive oxide and/or of the substrate) on the conductive coating of both substrates. The deposited strips of paste of conductive material (20', 20") are subsequently subjected to high temperature curing, in the order of 500-520°C, always higher than 300°C and lower than 550°C (temperature above which the layer of conductive oxide and/or the substrate are likely to be corrupted), allowing not only to remove as much as possible all the carriers of the conductive material within the paste and thus obtain a high conductivity, as much as possible close to that of the chosen conductive material, but also to obtain an advanced degree of sintering amongst the microgranules of conductive material which are present in the paste (which aggregate to form larger granules with a consequent reduction in porosity between the grains), and to achieve integration between the conductive material of the paste and the material of the conductive coating 11. In particular, said paste of conductive material which can be sintered at high temperature is composed of silver, such as for example the Dupont product 7713 Silver Feed-Through referring to a sintering temperature of 500-540°C. Alternatively it is possible to choose amongst the pastes: Chimet Silver Paste Ag 1710 IC, Chimet Silver Paste 1121 IC 80%. It is however clear that, in lieu of silver, as conductive material any other material can be chosen amongst those known to make connection elements between photoelectrochemical cells.

Before the step of closing the module, over the strips of conductive material 20" of the counterelectrode previously subjected to curing a paste 21 of conductive material is deposited which can be sintered at low temperature, usually based on organic carriers based on ethylcellulose or hydroxyethylcellulose or polyethylene glycol (PEG) or carbovax or terpineol or ethanol or combinations thereof and characterised by a high percentage of conductive material, such as for example Dupont Solamet PV410 Silver Conductor declaring a percentage up to 80% by weight of silver, so as not to damage other components in the device and still achieve a good conductivity. Alternatively, said paste of conductive material which can be sintered at low temperature is chosen amongst: Dupont Solamet PV410 Silver Conductor, Dupont Solamet PV412 Photovoltaic Metallization, Dupont Solamet PV430 Photovoltaic Metallization, Dupont Solamet PV480 Carbon Conductive Composition, ECM (Engineered Conductive Materials) Sol Ag CI-1042, ECM (Engineered Conductive Materials) Sol Ag DB-1541-S. It is however clear that, in place of pastes listed by way of example, other pastes can be chosen comprising conductive materials chosen from those known to produce connection elements between photoelectrochemical cells. When the module is closed, the conductive paste 21 with low sintering temperature is still liquid and closes the contact between the two conductive strips 20', 20", penetrating both.

Subjecting the conductive paste 21 to curing during the module mating or allowing this to happen, at least in part, during the early life of the device, the resulting contact is composed of three portions: two portions 20', 20" subjected to high temperature curing and highly conductive and an intermediate element 21 of conductive paste which can be sintered at low temperature. In particular, due to the low temperatures used for the curing of the paste, in the order of 70-170°C, and always lower than 300°C (temperature above which the dye of the photoelectrode and the material of the encapsulant are likely to be corrupted), it is possible to achieve a very low degree of sintering between the microgranules of conductive material in the paste (whose dimensions remain almost unchanged compared to those of starting pastes or at least the aggregation of micro-granules is very low). However, the curing temperature is sufficient to achieve a certain degree of integration between the conductive material of the paste with low sintering temperature and the material of the two portions 20', 20" previously subjected to high temperature curing, this is due to the high chemical compatibility of the conductive material of the paste with low sintering temperature and of the conductive material of the two portions 20', 20" previously subjected to high temperature curing.

From what was described above, it is clear that the manufacturing of the contacts is comprised in the process of manufacturing of the module itself and consequently follows the whole manufacturing.

In the following the manufacturing steps of photoelectrochemical modules are analysed in detail, comprising those interested by the manufacturing process of the vertical contact according to the present invention. It begins with the local removal of strips of conductive coating from substrates, the realization of the holes for the injection of the liquid electrolyte and the cleaning of substrates with acetone and ethanol. Subsequently, firing at 500 °C of the substrates is performed and, after cooling, on both substrates strips of paste of conductive material with high sintering temperature are deposited, and let to dry. Subsequently, on the substrates are respectively deposited the photoelectrode material (preferably TiO₂) and the counter electrode material (preferably platinum). Then, firing at 500-520 °C of the substrates is performed (thus obtaining the sintering of the conductive material of the opposing strips of the connection element) and with staining of the photoelectrode. At this point the closing step is performed: the encapsulant is applied on the counterelectrode and the conductive paste with low sintering temperature is deposited, in correspondence of the contact element previously deposited and already sintered. The two substrates (and with them the single cells and contact elements) are then mated in temperature (100 °C and more in general a temperature comprised between 70°C and 170°C, depending on the encapsulant material used). To complete the module the electrolyteis injected.

By isolating the process of making contact, according to a preferred embodiment, the process involves cleaning the substrate with solvents chosen amongst ethanol, isopropyl alcohol, acetone and subsequent firing at 500°C. Then, the deposition of a conductive paste in granules based on silver (or other conductive material chosen amongst those that can be used for making contacts between photoelectrochemical cells) occurs, which paste, during the following steps of manufacturing of the module, is subjected to curing at 500-520 °C and consequently undergoes sintering. Following sintering at so high temperature, the different organic binders and solvents of the conductive paste evaporate, making the contact almost exclusively made up of silver and residues of lead and glass. At such temperature, the resulting contact undergoes calcination, with aggregation of the granules to form larger granules and decrease in porosity and therefore its compactness and conductivity are high. Furthermore, always as an effect of temperature, the contact is sealed to the conductive coating.

In the step of mating the substrates the encapsulant is applied on the counterelectrode and, in correspondence of the contacts already calcinated, a conductive paste having a low point of calcination is applied.

Such pastes have the property of having a high density of conductive material, as resulting from the information sheet of the paste Dupont Solamet PV410 Silver Conductor, in which a percentage of conductive material up to 80% is indicated, and this, together with a specific formulation, usually based on organic carriers based on ethylcellulose (or as an alternative: hydroxyethylcellulose or polyethylene glycol (PEG) or Carbovax or Terpineol or ethanol or combinations thereof), allows the realization of little resistive contacts even if they are not brought to such temperatures to remove all residues.

Module sealing (by encapsulation) occurs at the temperature of 100-170°C and This is enough to realise the permanent interconnection bridge between the contacts of the two substrates, because of the high chemical compatibility of the conductive material of the paste with low sintering temperature and of the conductive material of the two portions 20', 20" previously subjected to high temperature curing.

In case sealing (by encapsulation) is made at ambient temperature, the contact is still guaranteed; and can be improved by putting the device some hours at temperature higher than ambient temperature or even by installing the device in the place of final use (heat from the sun increases the conductivity of the contact in the first days of life of the device).

### Example of manufacturing

As example of manufacturing the manufacturing of modules DSC 10cm x 20cm is reported, in which six cells sized 17cm x 1cm were connected in series according to the specifications of the invention.

The deposition of the rigid vertical contacts was made by screenprinting using the conductive paste DuPont 7713, while for the deposition of the contact by dispensing the conductive paste Dupont PV410 was used.

The combined manufacturing technique (screenprinting + dispensing) of vertical contacts was performed with the following steps:
l) Five strips of silver paste 7713 were deposite by screenprinting on both glass substrates (counterelectrode and photoelectrode). The used screenmesh was designed to depose five vertical contacts 0,5mm large and 17cm long for connecting the six cells.
2) The silver paste was subjected to curing in an oven at 525°C, thus sintering. Once sintered, the contact was 8 micron thick per each glass substrate.
3) A layer of silver conductive paste PV 410 was deposited by dispensing machine on a single electrode, in coincidence of the previously sintered silver strips.

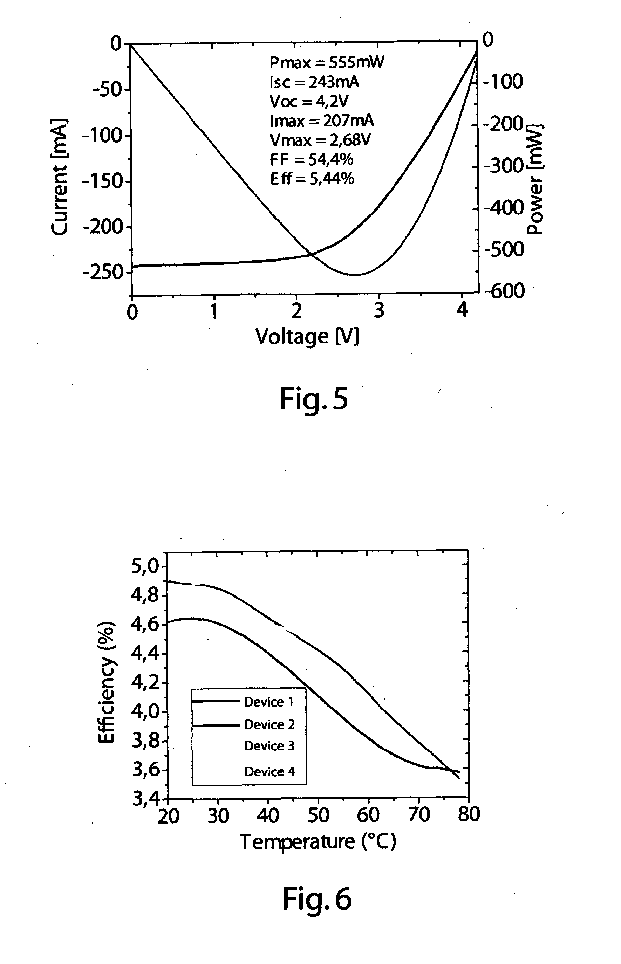

Figure 5 shows a diagram of the electrical characteristic of the obtained module, in which the module current and power are represented for changes of the operating voltage. In addition,the characteristic parameters of the device are reported, i.e. maximum power (Pmax), short circuit current (Isc), open circuit voltage (Voc), maximum power current (Imax), maximum power voltage (Vmax), efficiency (Eff) and fill factor (FF).

With reference to contacts manufactured according to the prior art, lacking an adequate structuring and tending to worsen their performance significantly over time due to mechanical and thermal stresses (modules with Z-connection made with contacts according to the prior art change from initial values of efficiency of 4-5% to values of only 0,5%) the contacts manufactured according to the present invention maintain better performances (modules with Z-connection manufactured with the contacts of the invention have proven to be able to maintain efficiency values of about 3.5% even after repeated thermal stresses).

Without whiching to be limited by theory, it would be possible to say that, being in fact the vertical contact deposed twice (by two distinct processes that alone would guarantee itself an electrical connection), it provides for an improved reliability in the realization of the contact. Moreover, the proposed solution, by the presence of the intermediate layer subjected to curing at temperatures such that the layer maintain even a minimum elasticity, allows the module to expand, as aresult of heating, without the vertical contact is affected, the intermediate layer adapting to such an expansion. Moreover, the low conductivity of the intermediate layer, and in particular the low interface conductivity of the same, typical of the kind of material of which the layer is made, is compensated by the high affinity between the conductive material of the intermediate layer and that of the layers subjected to curing at high temperature.

Some tests have were performed to demonstrate the stability with temperature of contacts manufactured this way. The tested modules had the following features and components:
- 6 cells (17cm x 1cm each)
- Spacing: 4mm
- Glass: 3mm TEC8
- TiO₂: DSL-18NRT Dyesol double layer
- Dye: N719 Dyesol
- Electrolyte HSE Dyesol
- Encapsulant Bynel 60 Solaronix

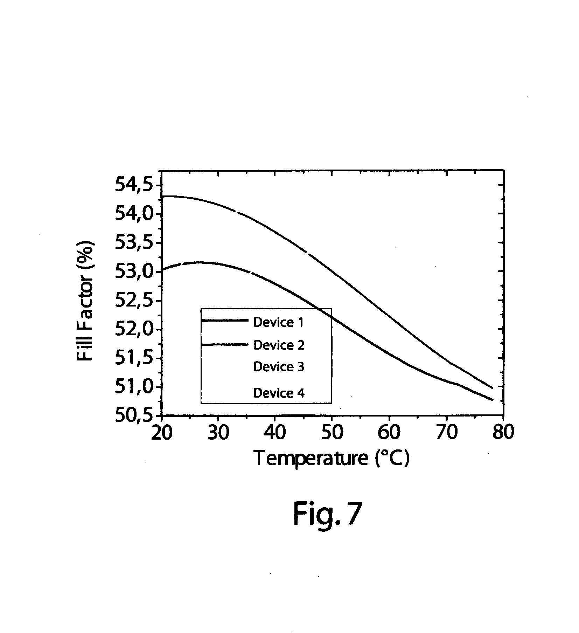

The devices were measured under sun simulator (1 sun) in a temperature range between 20 °C and 80 °C. The results obtained are shown in figures 6 and 7, wherein figure 6 shows a diagram of the efficiency as a function of temperature and figure 7 shows a diagram of the fill factor as a function of temperature of four modules obtained as previously described.

The results shown in Figures 6 and 7 show the vertical contact is still guaranteed even at high temperatures (the decay of performance shown in the figures is due to the temperature behavior of the materials making up the cell and not to the loss of vertical contact.

## Claims

1. Vertical electrical connection of photoelectrochemical cells, arranged side-by-side between two opposing substrates (10), at least one of which is transparent or semi-transparent, and covered, on the side facing towards the other substrate, by an electrically conductive coating (11) divided into a plurality of side-by-side regions electrically isolated by means of a corresponding number of interruptions (12), said vertical electrical connection being arranged between an electrically isolated region of the electrically conductive coating (11) of a substrate (10), in electric contact with a photoelectrochemical cell, and the electrically isolated region of the electrically conductive coating (11) of the opposing substrate (10), in contact with an adjacent photoelectrochemical cell, **characterised in that** the vertical electrical connection is made of three overlapping portions, that is two portions (20', 20"), respectively, coupled with the conductive coating (11) of each of the two opposing substrates (10) delimiting said photoelectrochemical cells, made of a conductive material in the form of granules aggregated together and integrated to said conductive coating (11), the sum of the heights of said two portions (20', 20") coupled with the conductive coating (11) of each of the two substrates (10) being equal or lower than the distance between the conductive coatings (11) of said two substrates (10) and further an intermediate portion (21), connecting the two portions (20', 20") coupled with the conductive coating (11) of each of the two substrates (10), made of a conductive material constituted by a matrix of polymers and/or epoxy resins and/or organic binder, in which particles are dispensed of conductive material or conductive polymers.

2. Vertical electrical connection of photoelectrochemical cells according to claim 1, **characterised in that** said two portions (20', 20") coupled with the conductive coating (11) of each of the two substrates (10) have porosity (expressed as volume of void spaces over total volume)) lower than 0,5.

3. Vertical electrical connection of photoelectrochemical cells according to claim 1 or 2, **characterised in that** said two portions (20', 20") coupled with the conductive coating (11) of each of the two substrates (10) comprise granules aggregated to each other with chemical type bonds.

4. Vertical electrical connection of photoelectrochemical cells according to any of the previous claims, **characterised in that** said two portions (20', 20") coupled with the conductive coating (11) of each of the two substrates (10) and said conductive coating (11) are aggregated with mechanical type bonds, chemical type bonds or a combination of these two types of bond.

5. Vertical electrical connection of photoelectrochemical cells according to any of the previous claims, **characterised in that** said two portions (20', 20") coupled with the conductive coating (11) of each of the two substrates (10) comprise an amount of residues of organic solvents and binders lower than 10% by weight.

6. Vertical electrical connection of photoelectrochemical cells according to claim 5, **characterised in that** said two portions (20', 20") coupled with the conductive coating (11) of each of the two substrates (10) comprise an amount of residues of organic solvents and binders lower than 0,1% by weight.

7. Vertical electrical connection of photoelectrochemical cells according to any of the previous claims, **characterised in that** said intermediate portion (21) comprises an amount of residues of organic solvents and binders higher than 5% by weight.

8. Method of manufacturing vertical electrical connection of photoelectrochemical cells, arranged side-by-side between two opposing substrates (10), at least one of which is transparent or semi-transparent, and covered, on the side facing towards the other substrate, by an electrically conductive coating (11) divided into a plurality of side-by-side regions electrically isolated by means of a corresponding number of interruptions (12), comprising the following steps:
- deposition, on each substrate, previously cleaned and fired but not yet mated with the corresponding opposing substrate to form a photoelectrochemical module, between an electrically isolated region of the electrically conductive coating (11) of a substrate (10), in electric contact with a photoelectrochemical cell, and the electrically isolated region of the electrically conductive coating (11) of the opposing substrate (10), in contact with an adjacent photoelectrochemical cell, of strips made of a paste of conductive material, which can be sintered at a high temperature of higher than 300°C and lower than 550°C;
- firing the substrates at a temperature between 300 and 550°C, thus obtaining the sintering of the conductive material of the previously deposited strips;
- deposition, in correspondence of the strips of material previously deposited and sintered, of a further layer of a paste of conductive material, which can be sintered at a low temperature of lower than 300°C;
- mating the opposing substrates and at the same time mating the strips of material previously deposited and sintered, by means of the interposition of said further layer of a paste of conductive material, which can be sintered at a low temperature of lower than 300°C, the mating being carried out, at a temperature between 70°C and 170°C.

9. Method of manufacturing vertical electrical connection of photoelectrochemical cells according to claim 8, **characterised in that** said step of firing the substrates and sintering the conductive material occurs at a temperature of 520°C.

10. Method of manufacturing vertical electrical connection of photoelectrochemical cells according to claim 8 or 9, **characterised in that** said step of mating the opposing substrates occurs at a temperature of about 100°C.

## Patentansprüche

1. Vertikale elektrische Verbindung von photoelektrochemischen Zellen, welche nebeneinander zwischen zwei gegenüberliegenden Substraten (10) angeordnet sind, wobei mindestens eines der Substrate transparent oder semitransparent ist und auf der Seite, die dem anderen Substrat zugewandt ist, mit einer elektrisch leitenden Schicht (11) überzogen ist, welche Schicht in eine Mehrzahl von nebeneinander angeordneten Regionen, die mittels einer entsprechenden Anzahl von Unterbrechungen (12) elektrisch isoliert sind, aufgeteilt ist, wobei die vertikale elektrische Verbindung zwischen einer elektrisch isolierten Region der elektrisch leitenden Beschichtung (11) eines Substrats (10), in elektrischem Kontakt mit einer photoelektrochemischen Zelle, und der elektrisch isolierten Region der elektrisch leitenden Beschichtung (11) des gegenüberliegenden Substrats (10), in Kontakt mit einer benachbarten photoelektrochemischen Zelle, angeordnet ist,
**dadurch gekennzeichnet, dass** die vertikale elektrische Verbindung aus drei überlappenden Abschnitten gebildet ist, das heißt, zwei Abschnitten (20', 20"), die jeweils mit der leitenden Beschichtung (11) eines der beiden gegenüberliegenden Substrate (10), welche die photoelektrochemischen Zellen begrenzen, gekoppelt sind und aus einem leitenden Material in Form von Granula, die miteinander aggregiert und in die leitende Beschichtung (11) integriert sind, gebildet sind, wobei die Summe der Höhen der beiden Abschnitte (20', 20"), die jeweils mit der leitenden Beschichtung (11) eines der beiden Substrate (10) gekoppelt sind, gleich der oder kleiner als die Distanz zwischen den leitenden Beschichtungen (11) der beiden Substrate (10) ist, und ferner einem Zwischenabschnitt (21), welcher die beiden Abschnitte (20', 20"), die jeweils mit der leitenden Beschichtung (11) eines der beiden Substrate (10) gekoppelt sind, verbindet und aus einem leitenden Material gebildet ist, welches aus einer Matrix von Polymeren und/oder Epoxyharzen und/oder organischem Binder aufgebaut ist, worin Teilchen von leitendem Material oder leitenden Polymeren dispergiert sind.

2. Vertikale elektrische Verbindung von photoelektrochemischen Zellen nach Anspruch 1, **dadurch gekennzeichnet, dass** die beiden Abschnitte (20', 20"), die jeweils mit der leitenden Beschichtung (11) eines der beiden Substrate (10) gekoppelt sind, eine Porosität (ausgedrückt als Leerraumvolumen gegenüber Gesamtvolumen) von weniger als 0,5 aufweisen.

3. Vertikale elektrische Verbindung von photoelektrochemischen Zellen nach Anspruch 1 oder 2, **dadurch gekennzeichnet, dass** die beiden Abschnitte (20', 20"), die jeweils mit der leitenden Beschichtung (11) eines der beiden Substrate (10) gekoppelt sind, Granula umfassen, die miteinander mittels chemischer Bindungen aggregiert sind.

4. Vertikale elektrische Verbindung von photoelektrochemischen Zellen nach irgendeinem der vorhergehenden Ansprüche, **dadurch gekennzeichnet, dass** die beiden Abschnitte (20', 20"), die jeweils mit der leitenden Beschichtung (11) eines der beiden Substrate (10) gekoppelt sind, und die leitende Beschichtung (11) mittels mechanischer Bindungen, chemischer Bindungen oder einer Kombination dieser beiden Bindungstypen aggregiert sind.

5. Vertikale elektrische Verbindung von photoelektrochemischen Zellen nach irgendeinem der vorhergehenden Ansprüche, **dadurch gekennzeichnet, dass** die beiden Abschnitte (20', 20"), die jeweils mit der leitenden Beschichtung (11) eines der beiden Substrate (10) gekoppelt sind, eine Menge an Resten von organischen Lösungsmitteln und Bindemitteln von weniger als 10 Gew.-% umfassen.

6. Vertikale elektrische Verbindung von photoelektrochemischen Zellen nach Anspruch 5, **dadurch gekennzeichnet, dass** die beiden Abschnitte (20', 20"), die jeweils mit der leitenden Beschichtung (11) eines der beiden Substrate (10) gekoppelt sind, eine Menge an Resten von organischen Lösungsmitteln und Bindemitteln von weniger als 0,1 Gew.-% umfassen.

7. Vertikale elektrische Verbindung von photoelektrochemischen Zellen nach irgendeinem der vorhergehenden Ansprüche, **dadurch gekennzeichnet, dass** der Zwischenabschnitt (21) eine Menge an Resten von organischen Lösungsmitteln und Bindemitteln von mehr als 5 Gew.-% umfasst.

8. Verfahren zur Herstellung einer vertikalen elektrischen Verbindung von photoelektrochemischen Zellen, welche nebeneinander zwischen zwei gegenüberliegenden Substraten (10) angeordnet sind, wobei mindestens eines der Substrate transparent oder semitransparent ist und auf der Seite, die dem anderen Substrat gegenüberliegt, mit einer elektrisch leitenden Beschichtung (11) überzogen ist, welche Beschichtung in eine Mehrzahl von nebeneinander angeordneten Regionen, welche mittels einer entsprechenden Zahl von Unterbrechungen (12) elektrisch isoliert sind, aufgeteilt ist, umfassend die folgenden Schritte:
- Abscheiden von Streifen, die aus einer Paste von leitendem Material, welches bei einer hohen Temperatur von höher als 300°C und niedriger als 550°C gesintert werden kann, gebildet wurden, auf jedem Substrat, das vorher gereinigt und gebrannt, jedoch noch nicht mit dem entsprechenden gegenüberliegenden Substrat gepaart wurde, um ein photoelektrochemisches Modul zwischen einer elektrisch isolierten Region der elektrisch leitenden Beschichtung (11) eines Substrats (10), in elektrischem Kontakt mit einer photoelektrochemischen Zelle, und der elektrisch isolierten Region der elektrisch leitenden Beschichtung (11) des gegenüberliegenden Substrats (10), in Kontakt mit einer benachbarten photoelektrochemischen Zelle, zu bilden;
- Brennen der Substrate bei einer Temperatur zwischen 300 und 550°C, wodurch das Sintern des leitenden Materials der zuvor abgeschiedenen Streifen erreicht wird;
- Abscheiden einer weiteren Schicht einer Paste von leitendem Material, welches bei einer niedrigen Temperatur von niedriger als 300°C gesintert werden kann, in Übereinstimmung mit den Streifen des zuvor abgeschiedenen gesinterten Materials;
- Paaren der gegenüberliegenden Substrate und gleichzeitig Paaren der Streifen von zuvor abgeschiedenem gesintertem Material, indem die weitere Schicht einer Paste von leitendem Material, welches bei einer niedrigen Temperatur von niedriger als 300°C gesintert werden kann, dazwischen positioniert wird, wobei die Paarung bei einer Temperatur zwischen 70 und 170°C durchgeführt wird.

9. Verfahren zur Herstellung einer vertikalen elektrischen Verbindung von photoelektrochemischen Zellen nach Anspruch 8, **dadurch gekennzeichnet, dass** der Schritt des Brennens der Substrate und Sinterns des leitenden Materials bei einer Temperatur von 520°C geschieht.

10. Verfahren zur Herstellung einer vertikalen elektrischen Verbindung von photoelektrochemischen Zellen nach Anspruch 8 oder 9, **dadurch gekennzeichnet, dass** der Schritt der Paarung der gegenüberliegenden Substrate bei einer Temperatur von etwa 100°C geschieht.

## Revendications

1. Connexion électrique verticale de cellules photo-électro-chimiques, disposées côte à côte entre deux substrats opposés (10), dont au moins l'un est transparent ou semi-transparent, et recouvert, sur le côté dirigé vers l'autre substrat, par un revêtement électriquement conducteur (11) divisé en une pluralité de zones côte à côte électriquement isolées à l'aide d'un nombre correspondant d'interruptions (12), ladite connexion électrique verticale étant disposée entre une zone électriquement isolée du revêtement électriquement conducteur (11) d'un substrat (10), en contact électrique avec une cellule photo-électro-chimique, et la zone électriquement isolée du revêtement électriquement conducteur (11) du substrat opposé (10), en contact avec une cellule photo-électro-chimique adjacente,
**caractérisée en ce que** la connexion électrique verticale est constituée par trois parties chevauchées, à savoir deux parties (20', 20"), respectivement, couplées au revêtement conducteur (11) de chacun des deux substrats opposés (10) délimitant lesdites cellules photo-électro-chimiques, constituées par un matériau conducteur sous la forme de granules agrégés les uns aux autres et intégrés audit revêtement conducteur (11), la somme des hauteurs desdites deux parties (20', 20") couplées au revêtement conducteur (11) de chacun des deux substrats (10) étant inférieure ou égale à la distance entre les revêtements conducteurs (11) desdits deux substrats (10), et, de plus, une partie intermédiaire (21), connectant les deux parties (20', 20") couplées au revêtement conducteur (11) de chacun des deux substrats (10), réalisée en un matériau conducteur constitué par une matrice de polymères et/ou de résines époxy et/ou de liant organique, dans lequel sont dispersées des particules de matériau conducteur ou de polymères conducteurs.

2. Connexion électrique verticale de cellules photo-électro-chimiques selon la revendication 1, **caractérisée en ce que** lesdites deux parties (20', 20") couplées au revêtement conducteur (11) de chacun des deux substrats (10) ont une porosité (exprimée en volume d'espaces vides par rapport au volume total) inférieure à 0,5.

3. Connexion électrique verticale de cellules photo-électro-chimiques selon l'une des revendications 1 ou 2, **caractérisée en ce que** lesdites deux parties (20', 20") couplées au revêtement conducteur (11) de chacun des deux substrats (10) comprennent des granules agrégés les uns aux autres avec des liaisons de type chimique.

4. Connexion électrique verticale de cellules photo-électro-chimiques selon l'une quelconque des revendications précédentes, **caractérisée en ce que** lesdites deux parties (20', 20") couplées au revêtement conducteur (11) de chacun des deux substrats (10) et ledit revêtement conducteur (11) sont agrégés avec des liaisons de type mécanique, des liaisons de type chimique ou une combinaison de ces deux types de liaison.

5. Connexion électrique verticale de cellules photo-électro-chimiques selon l'une quelconque des revendications précédentes, **caractérisée en ce que** lesdites deux parties (20', 20") couplées au revêtement conducteur (11) de chacun des deux substrats (10) comprennent une quantité de résidus de liants et de solvants organiques inférieure à 10% en poids.

6. Connexion électrique verticale de cellules photo-électro-chimiques selon la revendication 5, **caractérisée en ce que** lesdites deux parties (20', 20") couplées au revêtement conducteur (11) de chacun des deux substrats (10) comprennent une quantité de résidus de liants et de solvants organiques inférieure à 0,1 % en poids.

7. Connexion électrique verticale de cellules photo-électro-chimiques selon l'une quelconque des revendications précédentes, **caractérisée en ce que** ladite partie intermédiaire (21) comprend une quantité de résidus de liants et de solvants organiques supérieure à 5% en poids.

8. Procédé de fabrication de connexion électrique verticale de cellules photo-électro-chimiques, disposées côte à côte entre deux substrats opposés (10), dont au moins l'un est transparent ou semi-transparent, et recouvert, sur le côté dirigé vers l'autre substrat, par un revêtement électriquement conducteur (11) divisé en une pluralité de zones côte à côte électriquement isolées à l'aide d'un nombre correspondant d'interruptions (12), comprenant les étapes suivantes :
- le dépôt, sur chaque substrat, préalablement nettoyé et calciné, mais pas encore accouplé au substrat opposé correspondant pour former un module photo-électro-chimique, entre une zone électriquement isolée du revêtement électriquement conducteur (11) d'un substrat (10), en contact électrique avec une cellule photo-électro-chimique, et la zone électriquement isolée du revêtement électriquement conducteur (11) du substrat opposé (10), en contact avec une cellule photo-électro-chimique adjacente, de bandes réalisées en une pâte de matériau conducteur, qui peut être fritté à une température élevée, supérieure à 300°C et inférieure à 550 °C ;
- la calcination des substrats à une température comprise entre 300 et 550°C, de façon à obtenir ainsi le frittage du matériau conducteur des bandes précédemment déposées ;
- le dépôt, en correspondance avec les bandes de matériau précédemment déposées et frittées, d'une autre couche d'une pâte de matériau conducteur, qui peut être fritté à une basse température, inférieure à 300°C ;
- l'accouplement des substrats opposés, et, en même temps, l'accouplement des bandes de matériau précédemment déposées et frittées, à l'aide de l'interposition de ladite autre couche de pâte de matériau conducteur, qui peut être fritté à une basse température, inférieure à 300°C, l'accouplement étant effectué à une température comprise entre 70 °C et 170 °C.

9. Procédé de fabrication de connexion électrique verticale de cellules photo-électro-chimiques selon la revendication 8, **caractérisé en ce que** ladite étape de calcination des substrats et de frittage du matériau conducteur est effectuée à une température de 520°C.

10. Procédé de fabrication de connexion électrique verticale de cellules photo-électro-chimiques selon l'une des revendications 8 ou 9, **caractérisé en ce que** ladite étape d'accouplement des substrats opposés est effectuée à une température d'environ 100°C.
